# FASCICULE DE BREVET EUROPEEN

(11) **EP 1 973 819 B1**
(45) Date de publication et mention de la délivrance du brevet: **09.09.2009**
(21) Numéro de dépôt: 07717851.5
(22) Date de dépôt: 15.01.2007
(51) Int. Cl.: B65G 47/30

(54) **PROCÉDÉ ET POSTE DE GROUPAGE POUR PALETTISEUR**
VERFAHREN UND GRUPPIERSTATION FÜR EINEN PALETTIERER
METHOD AND GROUPING STATION FOR A PALLETIZER

(30) Priorité: 16.01.2006 FR 0600338
(43) Date de publication de la demande: 01.10.2008
(73) Titulaire: Sidel Participations, 76930 Octeville Sur Mer (FR)
(72) Inventeur: GERMAIN, Dominique, 76930 Octeville-sur-Mer (FR)
(74) Mandataire: Cabinet Plasseraud
(86) Numéro de dépôt international: PCT/FR2007/000063
(87) Numéro de publication internationale: WO 2007/080332

(56) Documents cités:
- DE-A1- 2 559 270
- FR-A- 2 758 131
- US-A- 6 164 045

## Description

La présente invention concerne un procédé complexe de groupage de produits, sous la forme de lots, et de transfert de ces lots en vue d'une palettisation, par exemple.

Elle concerne également l'installation qui permet la mise en oeuvre de ce procédé et en particulier le poste de groupage des produits et de transfert du lot de produits groupés.

Une installation de ce type est notamment représentée dans le document DE 25 59 270, pour le groupage de boîtes et le transfert du lot.

Pour certains types de produits, dont la surface de contact avec le convoyeur est relativement faible, on rencontre souvent des incidents sur ces installations.

Ainsi, par exemple, les produits du genre pack de bouteilles peuvent présenter des difficultés pour permettre une palettisation entièrement automatisée.

Dans le cas de packs constitués de quatre bouteilles, la surface de contact du fond avec le convoyeur est relativement faible ; cette particularité rend le pack extrêmement instable et elle est à l'origine de multiples incidents sur la ligne de palettisation.

Lorsque, de plus, le pack est constitué de bouteilles dont le fond est formé de plusieurs points d'appui, communément appelé « fond pétaloïde », il a tendance à « danser » sur les convoyeurs et notamment sur les convoyeurs à rouleaux ; de ce fait il peut prendre des positions qui sont totalement inadaptées pour réaliser un groupage avec d'autres packs et il n'est pas rare d'aboutir à un vulgaire vrac lors de la tentative de groupage.

Ces problèmes de groupage et de palettisation se rencontrent avec la plupart des produits qui ne sont pas disposés dans une caisse comme, par exemple, une caisse en carton bien parallélépipédique du type caisse américaine.

De ce fait, les cadences de palettisation de ces produits de petites dimensions sont relativement modestes. Leur instabilité s'accommode très mal des cadences élevées et des parcours où ces produits sont libres comme c'est le cas au niveau d'un poste de préparation et de groupage.

La présente invention propose un procédé de groupage et de transfert, pour ces produits particuliers, qui permet d'améliorer les cadences de palettisation en garantissant la formation de couches régulières avec des produits bien positionnés et, par voie de conséquence, la formation d'une palette bien équilibrée.

L'installation représentée dans le document DE 25 59 270 précité permet également de réaliser un groupage de produits de façon précise. Cette précision est tout d'abord plus facile à obtenir avec des produits du genre boîtes de conserves, mais elle découle de solutions qui se différencient nettement de celles qui sont adoptées par l'invention.

Le regroupement des boîtes s'effectue sur un intercalaire qui fait aussi office de plateau pour le transport du lot pendant son déplacement. La présence de ce plateau est indispensable compte tenu du système de poussoir qui requiert un espace important entre la table de groupage et le convoyeur qui prend en charge ledit plateau.

Le procédé et l'installation selon l'invention permettent de se dispenser de la présence d'un plateau intercalaire au niveau du poste de groupage ; ce poste de groupage comporte une sole qui est formée d'un système convoyeur classique, du type à rouleaux motorisés, sur laquelle les produits sont introduits directement.

Cette conception simple permet d'atteindre des cadences élevées de l'ordre de deux cents packs par minute, pour des packs constitués de quatre bouteilles en matériau thermoplastique dont le fond est particulier avec une multiplicité de points de contact, c'est-à-dire, pour des produits reconnus comme étant d'une très grande instabilité.

L'installation selon l'invention présente aussi l'avantage de pouvoir être placée directement en sortie de fardeleuse et donc de simplifier de façon singulière l'implantation de la chaîne de fabrication, de conditionnement et de palettisation.

Le procédé selon l'invention consiste, d'une manière générale, - à introduire les produits directement sur la sole du poste de groupage et de transfert, dans des couloirs séparés dont la largeur correspond à celle desdits produits pour former le lot de produits à palettiser, - à escamoter verticalement les structures de guidage qui forment lesdits couloirs, vers une position inactive, dès que ledit lot est formé, - à transférer ledit lot au poste de reprise et/ ou d'encaissage ou palettisation par des moyens de déplacement qui passent sous lesdites structures de guidage, - à repositionner les structures de guidage en position active dès le passage desdits moyens de déplacement et, - à relever ces derniers pour les ramener en position de départ en passant au-dessus desdites structures de guidage dans une sorte de mouvement tournant autour de ces dernières.

L'invention concerne également l'installation et en particulier le poste de groupage et de transfert qui permet la mise en oeuvre du procédé détaillé auparavant.

Ce poste de groupage est disposé entre le poste de sélection de la ligne d'arrivée des produits et la table du poste de reprise, lequel poste de groupage comprend : - une sole constituée d'un convoyeur motorisé pour entraîner les produits depuis l'entrée de ce poste de groupage jusqu'au système de butée située à son extrémité aval,- des structures formant des couloirs pour guider lesdits produits sur ledit convoyeur et pour les positionner selon plusieurs rangs parallèles entre eux, - des moyens pour déplacer le lot de produits ainsi formés et l'amener sur la table du poste de reprise, - des moyens pour escamoter lesdites structures de guidage en les plaçant au-dessus du niveaux desdits moyens de déplacement du lot, - des moyens pour permettre le retour desdits moyens de déplacement à leur point de départ en passant au-dessus des produits qui arrivent audit poste de groupage et au-dessus desdites structures de guidage de ces produits de façon à engendrer, avec lesdits moyens de déplacement, un mouvement enveloppant autour de la paroi-guide de ces structures de guidage.

Toujours selon l'invention, le poste de groupage comporte - des structures de guidage en forme de T renversé dont les branches horizontales constituent la paroi-guide et - des moyens de déplacement des produits en forme de poussoirs, lesquels poussoirs sont, d'une part, portés par des bras latéraux, lesquels bras latéraux sont espacés d'une distance supérieure à la longueur de ladite paroi-guide et, d'autre part, séparés entre eux par un intervalle suffisant pour passer de part et d'autre de la branche verticale dudit T, laquelle distance et lequel intervalle permettent à ces poussoirs de tourner autour desdites branches horizontales dudit T, selon un mouvement enveloppant, pendant le cycle de transfert du lot de produits vers le poste de reprise.

Selon une autre disposition de l'invention, le poste de groupage et de transfert comprend un châssis dont l'ossature parallélépipédique reçoit, dans sa partie médiane supérieure, un bâti aménagé pour supporter les structures de guidage qui forment, avec les parois de guidage, les différents couloirs, lequel bâti se présente sous la forme de poutres horizontales, situées dans un plan perpendiculaire auxdits couloirs, lesquelles poutres comportent des glissières pour porter lesdites structures de guidage et en particulier l'extrémité de la branche verticale du T.

Toujours selon l'invention, la branche verticale du T de chaque structure de guidage est du type télescopique, laquelle branche comprend un fût qui s'étend vers le bas à partir du bâti support et une platine en forme de U qui soutient la paroi-guide avec, entre les deux, des glissières et un organe de manoeuvre du genre vérin qui permet de relever ladite paroi-guide et de l'escamoter au-dessus du niveau des produits pour permettre leur transfert vers le poste de palettisation.

Selon une autre disposition de l'invention, le bâti comprend également des moyens qui permettent de réaliser un réglage des structures de guidage les unes par rapport aux autres et en particulier un réglage de leur écartement pour régler la largeur des couloirs en fonction du type de produit à palettiser. Ces moyens de réglage de l'écartement entre les structures de guidage sont constitués d'un système vis-écrou dont la partie vis est aménagée sur un arbre qui s'étend dans la partie médiane du bâti et dans la partie supérieure de chaque fût desdites structures de guidage, lesquels fûts sont groupés par trois : - un fût central qui fait office de référence et qui est fixe par rapport audit bâti et - deux fûts latéraux disposés de part et d'autre dudit fût central, lesquels fûts latéraux comportent chacun un écrou qui coopère avec ladite vis dont les pas sont inversés de façon à écarter simultanément lesdits fûts latéraux par rapport au fût central.

Toujours selon l'invention, le châssis comporte, latéralement, des rails qui sont parallèles au bâti et qui servent de supports et de guides pour les chariots équipés des poussoirs, lesquels chariots sont solidaires d'un seul et même mécanisme d'actionnement pour balayer tout le poste de groupage lors du transfert des produits et ils comportent des moyens pour guider et manoeuvrer les bras qui portent lesdits poussoirs de façon à pouvoir escamoter ces derniers au-dessus des nouveaux produits et des parois-guides.

Selon une autre disposition de l'invention, les structures de guidage comportent une paroi-guide adaptée au type de produit à palettiser, laquelle paroi est constituée d'une poutre qui s'étend sur toute la longueur dudit poste de groupage, dans l'alignement de l'arrivée des produits, laquelle poutre comporte, sur le côté qui est exposé auxdits produits, un rail de guidage équipé d'une multitude de galets pour faciliter le mouvement desdits produits dans les couloirs délimités par ces parois-guides.

Toujours selon l'invention, la poutre de la structure de guidage comporte une sorte de coiffe qui s'étend au-dessus de la poutre et du rebord supérieur du ou des rails à galets, laquelle coiffe permet d'éviter tout risque d'accrochage de l'enveloppe des produits et en particulier, pour des produits du type packs, du film plastique qui enserre les bouteilles.

L'invention sera encore détaillée à l'aide de la description suivante et des dessins annexés donnés à titre indicatif, et dans lesquels :
- la figure 1 est une vue en plan schématique d'une installation de palettisation, avec les éléments constitutifs essentiels, sans les chariots qui portent les moyens de déplacement en forme de poussoirs ;
- la figure 2 est une élévation schématique du poste de préparation et de groupage des produits sur quatre rangs, lequel poste est vu du côté de l'arrivée desdits produits ;
- la figure 3 est une section du fût de l'une des structures de guidage ;
- la figure 4 représente, d'une façon plus détaillée, la section d'une paroi-guide centrale, disposée entre deux couloirs ;
- la figure 5 montre les structures de guidage en position active et les poussoirs en position de départ, en amont desdites structures de guidage ;
- la figure 6 représente les structures de guidage en position inactive, c'est-à-dire dans une position où elles sont escamotées de façon à libérer le passage pour les poussoirs ;
- la figure 7 représente, vu de côté, et en particulier vu depuis l'arrivée des produits, le poste de groupage avec les différentes structures de guidage en position inactive ;
- la figure 8 représente le poste de groupage au moment de la fin du transfert du lot de produits sous l'effet des poussoirs ;
- la figure 9 représente le poste de groupage avec les structures de guidage en position active et, représentés sous plusieurs formes, les poussoirs qui circulent au-dessus des parois-guides pour revenir en position de départ ;
- la figure 10 montre les structures de guidage en position active et les poussoirs en position inactive, relevés vers le haut de façon à passer au-dessus des parois-guides.

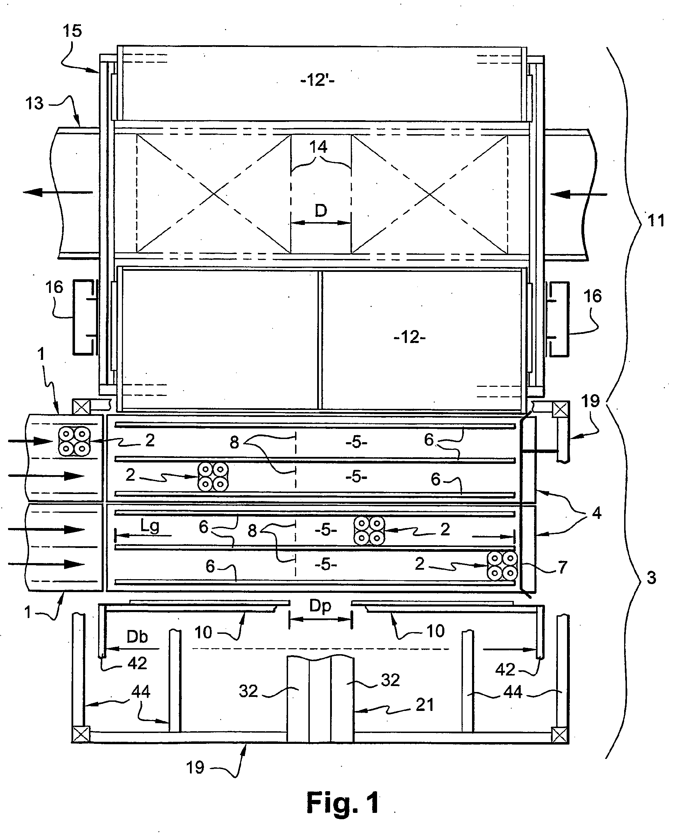

L'installation qui est représentée figure 1 comprend deux lignes (1) d'arrivée de produits (2) et chaque ligne véhicule deux rangées de produits. La partie aval de ces lignes (1) constitue le poste de sélection qui réalise l'alimentation du poste (3) de groupage et de transfert, lequel poste (3) se situe dans le prolongement desdites lignes (1).

Dans l'exemple de réalisation représenté sur la figure 1, le poste (3) comprend une sole qui est constituée de deux convoyeurs (4) disposés en aval des lignes (1) d'arrivée. Ces convoyeurs (4) sont généralement constitués de rouleaux motorisés.

Les produits (2) sont introduits, au niveau du poste (3), sur les convoyeurs (4) et dans des couloirs (5) qui sont délimités par des parois-guides (6). L'extrémité aval des couloirs (5) comporte une butée (7) qui s'étend sur toute la largeur du poste (3).

Pour l'installation telle que représentée, on remarque aussi la présence de butées (8) intermédiaires, en forme de butées-cheminées, pour permettre la préparation d'un deuxième lot de produits (2). Ces butées (8) sont mises en position active pour arrêter les produits (2) lorsque la partie aval des couloirs (4) est remplie avec la quantité de produits (2) prévue pour former un lot.

Lorsque le lot de produits (2) est réalisé, sur la sole du poste (3) de groupage, il est déplacé par des moyens (10) appropriés, dans un sens qui est perpendiculaire aux couloirs (5), vers un poste (11) de reprise et en particulier sur la table (12) de dépose de ce poste (11). Ce poste (11) de reprise correspond, par exemple, comme représenté figure 1, à un poste de palettisation au niveau duquel la table (12) est du type escamotable et elle fonctionne en coopération avec un volet (12') qui prend en charge une moitié de chaque lot avant de déposer l'ensemble des lots sur les palettes (14).

Le poste (11) comprend un convoyeur (13) sur lequel arrivent des palettes vides et d'où repartent des palettes chargées avec des couches de produits (2) qui sont empilées les unes sur les autres. Le poste (11) de palettisation représenté figure 1 permet la constitution de palettes par paires, ce qui présente l'avantage d'accélérer les cadences de palettisation.

Lorsque le lot de produits (2) est posé sur la table (12), cette table se déplace pour amener ledit lot au-dessus des palettes (14). Le lot est densifié par des moyens appropriés, non représentés, avant l'escamotage de la table (12) et du volet (12'), et la dépose du (double) lot sur les palettes, ou sur les couches précédentes déjà en place, s'effectue par simple gravité.

La table escamotable (12) et son volet (12') sont portés par un cadre (15) qui est mobile verticalement, guidé dans des montants (16). Ces éléments font partie du poste (11) de palettisation qui se présente sous la forme d'un module associé au poste (3) de groupage et de transfert, lequel poste (3) se présente également sous la forme d'un module.

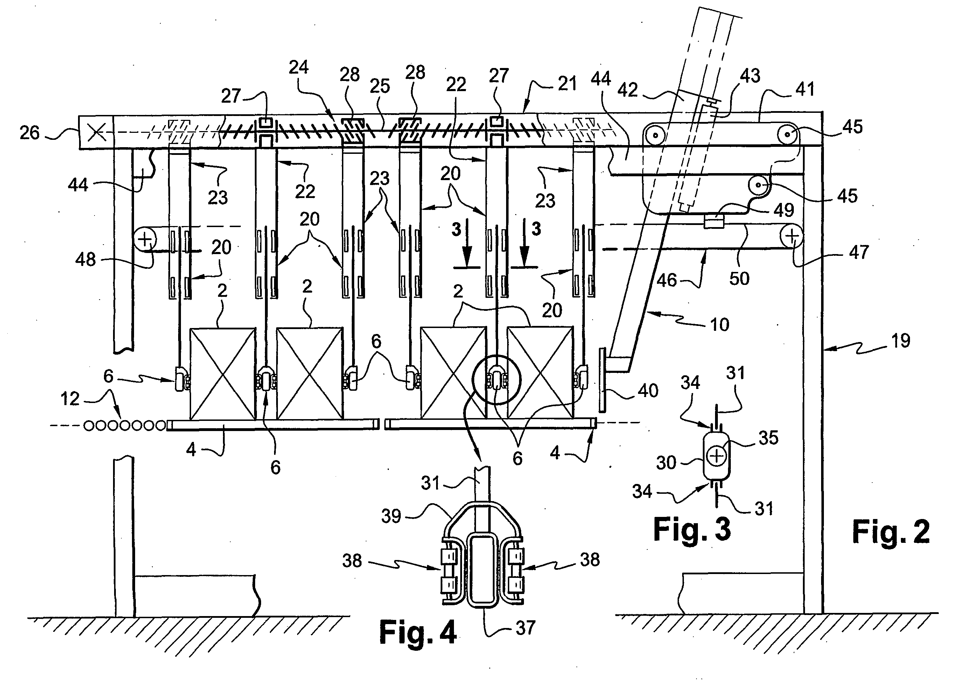

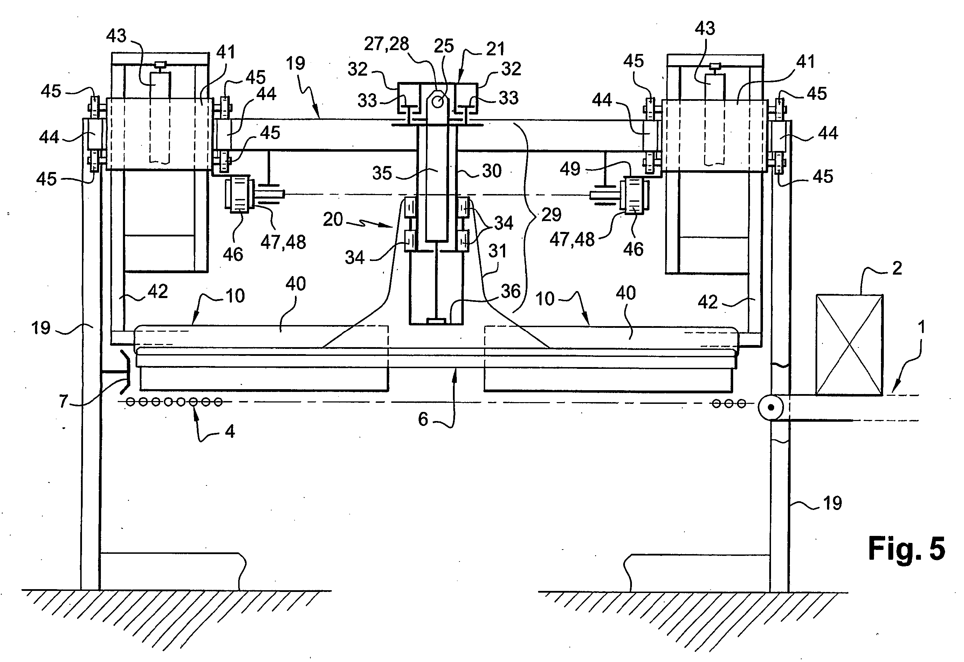

La figure 2 et la figure 5 montrent schématiquement ce poste (3) de groupage et de transfert ; la figure 2 le montre vu de côté et en particulier vu depuis les lignes (1) d'arrivée, et la figure 5 le montre vu depuis le poste (11) de palettisation.

Ce poste (3) est façonné sur la forme d'un module, lequel module est délimité par un châssis (19) qui forme une sorte d'enveloppe parallélépipédique. Il comprend les convoyeurs (4) sur lesquels sont disposés les produits (2), lesquels produits sont canalisés au moyen des parois-guides (6).

Ces parois-guides (6) font partie de structures (20) qui réalisent le guidage des produits lors de leur déplacement avec le convoyeur (4). Ces structures (20) de guidage sont portées par un bâti (21) en forme de poutre, lequel bâti (21) est disposé dans la partie médiane supérieure du châssis (19). Ce bâti (21) est perpendiculaire aux parois-guides (6) et il renferme des moyens qui permettent de régler l'écartement entre les différentes structures (20) de guidage.

On remarque que les structures (20) de guidage sont groupées par trois au niveau de chaque convoyeur (4) : une structure (22) centrale et deux structures (23) latérales. La structure (22) centrale est fixe par rapport au bâti (21) alors que les structures (23) latérales sont mobiles au moyen d'un système vis-écrou (24) pour modifier la largeur des couloirs (5).

Un arbre (25) muni de filetages est logé dans le bâti (21) ; cet arbre (25) est guidé en rotation et il est immobilisé en translation dans ledit bâti (21) et il est entraîné en rotation par des moyens (26) appropriés, constitués, par exemple, d'une manivelle ou d'un moteur avec commande à distance.

L'arbre (25) traverse la tête de chaque structure (20) de guidage ; les structures (22) centrales peuvent être immobilisées en translation par l'arbre (25) au niveau de leur tête (27) alors que les structures (23) latérales comportent une tête (28) en forme d'écrou qui coopère avec les parties filetées aménagées sur l'arbre (25).

Ces parties filetées aménagées sur l'arbre (25) constituent des vis à pas inversés de façon à rapprocher ou à écarter simultanément les structures (23) latérales par rapport à la structure (22) centrale.

Les structures (20) de guidage se présentent sous la forme d'un T renversé dont la branche horizontale correspond à la paroi-guide (6) et dont la branche (29) verticale est télescopique.

Cette branche (29) verticale, figure 5, est constituée d'un fût (30) et d'une platine (31). Le fût (30) comporte, à sa partie supérieure, un aménagement constitué d'une paire de coulisseaux (32) qui lui permet de coopérer avec des glissières (33) horizontales qui font partie du bâti (21) ; il comporte également, logé(e) dans ce bâti (21) et entre lesdites glissières (33), soit une tête (27) qui sert de guide pour l'arbre (25), soit un écrou (28) qui, de plus, coopère avec ledit arbre (25).

La platine (31) se présente sous une forme de U vertical qui est solidaire de la paroi-guide (6). Cette platine (31) est mobile par rapport au fût (30), au moyen de glissières (34) aménagées de chaque côté dudit fût (30). Un organe de manoeuvre, du genre vérin (35), est interposé entre la partie supérieure du fût (30) et le fond (36) de la platine (31). Ce vérin (35) permet d'escamoter la paroi-guide (6) pour libérer le passage des moyens (10) en forme de poussoirs, représentés figure 1, qui déplacent le lot de produits (2) vers le poste (11) de palettisation.

La figure 3 montre, en coupe, le fût (30) qui est constitué d'un profilé de section rectangulaire. Dans ce fût on trouve le vérin (35) et, sur les petites faces externes on trouve les glissières (34) qui servent de guides à la platine (31).

La figure 4 montre, d'une façon plus détaillée, la section d'une paroi-guide (6) qui constitue la partie active des structures (20) de guidage et en particulier la section d'une paroi-guide (6) de la structure (22) centrale.

Cette paroi-guide (6) est constituée d'une poutre (37) qui s'étend sur toute la longueur du poste (3), au-dessus du convoyeur (4). Cette poutre (37) se présente sous la forme d'un profilé de section rectangulaire ; elle est solidaire de la platine (31) et elle comporte, sur ses flancs en contact avec les produits (2), des rails (38) de guidage du type à galets qui permettent de faciliter la circulation desdits produits (2).

Pour les parois-guides (6) qui font partie des structures (23), la poutre (37) ne comporte qu'un seul rail (38), lequel rail est situé du côté du passage des produits (2).

On remarque aussi, au-dessus de la poutre (37), une sorte de coiffe (39) qui s'étend jusqu'au niveau des rebords supérieurs de rails (38) ; cette coiffe (39) permet d'éviter les risques d'accrochage des produits (2) sur cette paroi-guide (6), et en particulier, lorsqu'il s'agit de packs, l'accrochage du film plastique d'emballage au niveau de ses lunules latérales.

Les moyens (10) de déplacement des lots de produits (2) sont constitués d'une paire de poussoirs (40). Chaque poussoir (40) est affecté à un lot de produits dans le cas d'une installation où la palettisation s'effectue, comme représenté figure 1, sur une paire de palettes. L'installation peut également se concevoir sous une forme plus modeste avec un seul poussoir et une structure de guidage en équerre.

Chaque poussoir (40) est solidaire d'un chariot (41) par l'intermédiaire d'un bras (42) qui est mobile verticalement ; le chariot (41) circule latéralement, à la partie supérieure du châssis (19), et le bras (42) est guidé sur le chariot (41). Ce bras (42) est mobile sous l'effet d'un organe de manoeuvre constitué d'un vérin (43) pour escamoter ledit poussoir (40) lors de son retour à son point de départ, en position repos, après avoir transféré et largué le lot des produits (2) au niveau du poste (11) de palettisation.

Le chariot (41) est porté et guidé par des rails (44) qui font partie du châssis (19). Ces rails (44) sont parallèles au bâti (21) et servent de chemins de roulement pour les galets (45) du chariot (41).

Selon le mode de réalisation représenté sur les figures, le poste (3) de groupage et de transfert comporte deux chariots (41). Les deux chariots (41) sont mobiles longitudinalement ; ils sont chacun solidaires, par exemple, d'une courroie (46) sans fin du type courroie crantée ; ces courroies (46) sont tendues entre des jeux de poulies (47) et (48) qui sont montées sur des arbres disposés transversalement à chacune des extrémités du châssis (19).

L'un des arbres est motorisé pour réaliser l'entraînement des courroies (46) et des chariots (41) sur la distance nécessaire au transfert du lot de produits (2).

Les chariots (41) comportent chacun une patte (49) qui s'étend latéralement jusqu'au niveau du brin (50) supérieur de la courroie (46) correspondante, laquelle patte (49) est fixée à ladite courroie par tout moyen approprié.

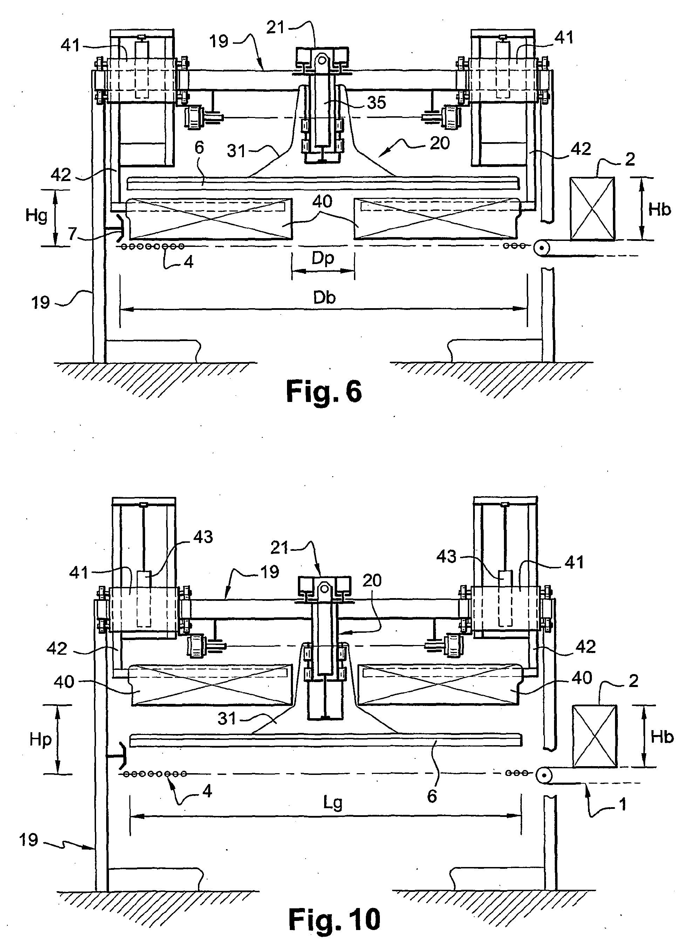

Les figures 6 à 10 illustrent les différentes phases du procédé de groupage au niveau du poste (3), en complément des figures 2 et 5 précédentes.

La figure 6 fait suite aux figures 2 et 5 ; elle montre les structures (20) de guidage en position inactive, escamotées au-dessus du niveau des poussoirs (40). Les parois-guides (6) de ces structures (20) se situent à une hauteur Hg par rapport au convoyeur (4) qui est sensiblement de l'ordre de la hauteur Hb des produits (2).

On remarque aussi sur cette figure que la distance Db qui sépare les bras (42) de chacun des chariots (41) est supérieure à la longueur Lg, visible figure 10, des parois-guides (6) des structures (20) de guidage.

Lorsque les parois-guides (6) libèrent les produits (2) et le passage pour les poussoirs (40), ces derniers peuvent transférer le lot de produits (2), non représentés sur cette figure 6, vers le poste (11) de palettisation.

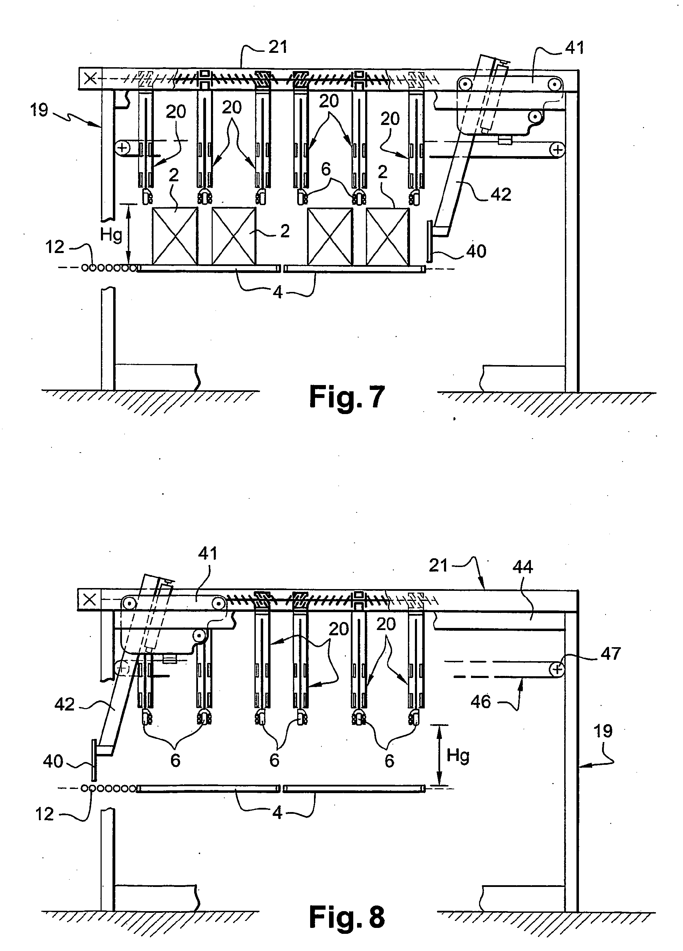

Les produits (2), prêts à être transférés, sont visibles figure 7 ; le lot est composé de plusieurs rangs de produits ; ces rangs sont légèrement espacés et ils sont embarqués par les poussoirs (40) au fur et à mesure du déplacement de ces derniers.

Le mouvement des poussoirs (40), c'est-à-dire leur vitesse, peut être adapté au type de produits (2) de façon à gérer l'accostage des rangs entre eux au fur et à mesure de leur prise en charge par lesdits poussoirs (40).

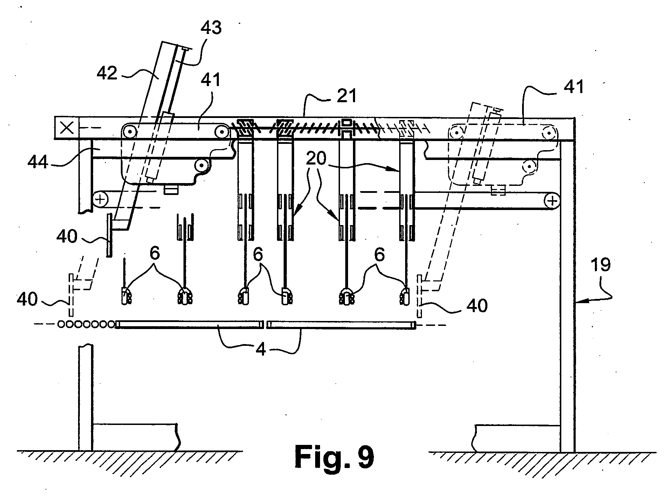

La figure 8 montre les poussoirs (40) en fin de course, après le transfert du lot de produits (2) sur la table (12) du poste (11) de palettisation. Au niveau de cette phase, les structures (20) de guidage sont remises en position active, comme représenté figure 9, pour permettre aux produits (2) d'accéder au poste (3) de groupage, sans attendre le retour des poussoirs (40).

Les poussoirs (40) sont eux aussi escamotables et peuvent s'élever au-dessus du niveau des parois-guides (6), comme représenté figure 10, d'une hauteur Hp qui correspond au moins à la hauteur Hb des produits (2). Dans cette position, on remarque que l'espace central entre les poussoirs (40) est aménagé pour ne pas interférer avec la platine (31) de la structure (20) de guidage. Cette distance Dp entre les poussoirs (40) se retrouve aussi au niveau de la distance D qui sépare deux palettes (14) en place au niveau du poste (11) de palettisation

La forme en T renversé des structures (20) de guidage et la forme en équerre de la structure des poussoirs (40) permettent cette combinaison originale des mouvements des deux structures l'une par rapport à l'autre.

Les poussoirs (40) se situent en face des branches latérales du T et ils sont écartés pour permettre le passage de la branche centrale verticale dudit T. De cette façon, les poussoirs (40) exécutent une sorte de mouvement tournant autour des branches latérales du T, un mouvement qui enveloppe les parois-guides (6).

Cette conception des structures (20) de guidage et des structures des poussoirs (40) se prête bien à une double palettisation, comme représenté figure 1 ; elle permet notamment l'obtention de cadences très intéressantes pour des produits (2) du type pack de bouteilles ou autres.

L'installation peut également fonctionner avec un seul poussoir et des structures (20) de guidage en forme d'équerres.

## Revendications

1. Procédé de groupage de produits sous forme de lot et de transfert dudit lot vers un poste de reprise, lequel procédé consiste : - à introduire les produits directement sur la sole du poste (3) de groupage et de transfert, dans des couloirs (5), pour former le lot, - à escamoter verticalement, dès que ledit lot est formé, les structures (20) de guidage formant lesdits couloirs (5), - à transférer ledit lot vers ledit poste (11) de reprise par des moyens de déplacement en forme de poussoirs (40) qui passent sous lesdites structures de guidage, - à repositionner ces structures (20) de guidage en position active et - à relever lesdits poussoirs (40) pour les ramener en position de départ en passant au-dessus desdites structures (20) de guidage, dans une sorte de mouvement tournant autour de ces dernières.

2. Poste de groupage et de transfert de produits (2) dans une installation de palettisation, par exemple, pour la mise en oeuvre du procédé selon la revendication 1, lequel poste (3) est disposé entre le poste de sélection de la ligne (1) d'arrivée et la table (12) du poste (11) de reprise ou de palettisation, **caractérisé en ce qu'**il comporte : - une sole constituée d'un convoyeur (4) motorisé pour entraîner lesdits produits (2) depuis l'entrée jusqu'au système de butée (7) situé à son extrémité aval, - des structures (20) pour guider lesdits produits (2) sur ledit convoyeur (4) et pour les positionner selon plusieurs rangs parallèles entre eux, - des moyens (10) pour déplacer le lot ainsi formé et l'amener sur ladite table (12), - des moyens pour escamoter lesdites structures (20) de guidage en les plaçant au-dessus du niveau desdits moyens (10) de déplacement desdits produits (2), - des moyens pour permettre le retour desdits moyens (10) de déplacement à leur point de départ en passant au-dessus des produits (2) amenés par ledit convoyeur (4) et au-dessus desdites structures (20) de guidage de façon à engendrer, pour lesdits moyens (10) de déplacement, un mouvement enveloppant autour des parois-guides (6) desdites structures (20) de guidage.

3. Poste de groupage selon la revendication 2, **caractérisé en ce qu'**il comporte - des structures (20) de guidage en forme de T renversé dont la branche horizontale constitue la paroi-guide (6) et - des moyens (10) de déplacement du lot de produits (2) en forme de poussoirs (40), lesquels poussoirs (40) sont, d'une part, portés par des bras (42) latéraux qui sont espacés d'une distance supérieure à la longueur de ladite paroi-guide (6) et, d'autre part, ils sont espacés entre eux d'une distance suffisante pour passer de part et d'autre de la branche verticale dudit T, lesquelles distances permettent à ces poussoirs (40) de tourner autour desdites branches dudit T.

4. Poste de groupage selon la revendication 3, **caractérisé en ce qu'**il comporte un châssis (19) dont l'ossature parallélépipédique comprend, dans sa partie médiane supérieure, un bâti (21) pour supporter les structures (20) de guidage, lequel bâti (21) se présente sous la forme d'une poutre horizontale qui est aménagée pour porter lesdites structures et en particulier la branche verticale du T.

5. Poste de groupage selon la revendication 4, **caractérisé en ce que** la branche verticale du T de chaque structure (20) de guidage est du type télescopique, laquelle branche comprend un fût (30) qui s'étend vers le bas à partir du bâti (21) support et une platine (31) en forme de U avec, entre les deux, des glissières (34) et un organe de manoeuvre du genre vérin (35).

6. Poste de groupage selon l'une quelconque des revendications 4 ou 5, **caractérisé en ce qu'**il comporte un bâti (21) qui comprend des moyens appropriés pour permettre un réglage des structures (20) de guidage les unes par rapport aux autres et en particulier un réglage de leur écartement en fonction du type de produits (2).

7. Poste de groupage selon l'une quelconque des revendications 4 à 6, **caractérisé en ce que** les moyens de réglage de l'écartement des structures (20) de guidage sont constitués d'un système vis-écrou (24) dont la partie vis est aménagée sur un arbre (25) qui s'étend dans le bâti (21) support et dans la partie supérieure de chaque fût (30), lesquels fûts (30) sont groupés par trois : - un fût (22) central qui fait office de fût de référence pour ledit système vis-écrou (24) et qui est fixe par rapport audit bâti (21) et, - deux fûts (23) latéraux disposés de part et d'autre de ce fût (22) fixe, lesquels fûts (23) latéraux comportent chacun un écrou (28) qui coopère avec ladite vis dont les pas sont inversés de façon à écarter simultanément lesdits fûts (23) latéraux, de part et d'autre dudit fût central (22), pour adapter l'écartement des structures (20) de guidage aux dimensions des produits (2).

8. Poste de groupage selon l'une quelconque des revendications 4 à 7, **caractérisé en ce que** le châssis (19) comporte, latéralement, des rails (44) pour porter et guider les chariots (41) sur lesquels sont montés les poussoirs (40), lesquels chariots (41) sont solidaires d'un seul et même mécanisme de déplacement du type à courroies (46) sans fin et ils comportent des moyens du genre vérins (43) pour manoeuvrer verticalement lesdits poussoirs (40).

9. Poste de groupage selon l'une quelconque des revendications 3 à 8, **caractérisé en ce que** la structure (20) de guidage comprend une paroi-guide (6) adaptée au type de produits (2), laquelle paroi-guide (6) est constituée d'une poutre (37) qui s'étend sur toute la longueur dudit poste (3) de groupage, laquelle poutre (37) comporte, sur le côté exposé auxdits produits (2), un rail (38) de guidage équipé d'une multitude de galets pour faciliter le mouvement desdits produits (2) entre lesdites parois-guides (6).

10. Poste de groupage selon la revendication 9, **caractérisé en ce que** la poutre (37) de la structure (20) de guidage comporte une sorte de coiffe (39) qui s'étend au-dessus du rebord supérieur des rails (38) à galets, laquelle coiffe (39) prévient tout risque d'accrochage de l'enveloppe des produits (2) au niveau desdits rails (38), et en particulier, lorsqu'il s'agit de packs, de l'enveloppe en forme de film plastique.

## Claims

1. Method of grouping products in batch form and of transferring said batch to a pick-up station, which method comprises: - introducing the products directly at the base of the grouping and transfer station (3), in aisles (5), to form the batch, - vertically retracting, once said batch is formed, the guide structures (20) forming said aisles (5), - transferring said batch to said pick-up station (11) by movement means in the form of pushers (40) which pass under said guide structures, - repositioning these guide structures (20) in their active position and - raising said pushers (40) in order to bring them into their starting position passing above said guide structures (20), in a sort of turning movement around these latter.

2. Station for grouping and transferring products (2) in a palletization installation, for example, for the implementation of the method according to claim 1, which station (3) is arranged between the selection station of the arrival line (1) and the table (12) of the pick-up or palettization station (11), **characterized in that** it comprises: - a base constituted by a motorized conveyor (4) for carrying said products (2) from the entrance as far the stop system (7) situated at its downstream end, - structures (20) for guiding said products (2) on said conveyor (4) and for positioning them in several parallel rows, - means (10) of moving the batch thus formed and bringing it onto said table (12), - means of retracting said guide structures (20), placing them above the level of said means (10) of moving said products (2), - means of allowing said movement means (10) to return to their starting point, passing above the products (2) carried by said conveyor (4) and above said guide structures (20) so as to create, for said movement means (10), an enveloping movement around guide walls (6) of said guide structures (20).

3. Grouping station according to claim 2, **characterized in that** it comprises - guide structures (20) in the form of an inverted T, the horizontal section of which constitutes the guide wall (6) and - means (10) of moving the batch of products (2) in the form of pushers (40), which pushers (40) are, on the one hand, carried by lateral arms (42) which are spaced apart by a distance greater than the length of said guide wall (6) and, on the other hand, they are spaced apart from one another by a sufficient distance to pass either side of the vertical section of said T, which distances allow these pushers (40) to turn around said sections of said T.

4. Grouping station according to claim 3, **characterized in that** it comprises a framework (19), the parallelepipedic carcass of which comprises in its upper median part, a frame (21) for supporting the guide structures (20), which frame (21) is in the form of a horizontal beam which is arranged to carry said structures and in particular the vertical section of the T.

5. Grouping station according to claim 4, **characterized in that** the vertical section of the T of each guide structure (20) is of the telescopic type, which section comprises a shaft (30) which extends downwards from the supporting frame (21) and a U-shaped plate (31) with, between the two, slide rails (34) and a jack-type manoeuvring device (35).

6. Grouping station according to any one of claims 4 or 5, **characterized in that** it includes a frame (21) which contains suitable means allowing an adjustment of the guide structures (20) relative to one another and in particular an adjustment of the space between them depending on the type of products (2).

7. Grouping station according to any one of claims 4 to 6, **characterized in that** the means of adjusting the space between the guide structures (20) are constituted by a screw and nut system (24), the screw part of which is arranged on a spindle (25) which runs in the supporting frame (21) and in the upper part of each shaft (30), which shafts (30) are grouped in threes: - a central shaft (22) which acts as a reference shaft for said screw and nut system (24) and which is fixed in relation to said frame (21) and, - two side-shafts (23) arranged on either side of this fixed shaft (22), which side-shafts (23) each contain a nut (28) which cooperates with said screw, the threads of which are reversed so as to simultaneously keep said side-shafts (23) apart on either side of said central shaft (22), in order to match the space between the guide structures (20) to the dimensions of the products (2).

8. Grouping station according to any one of claims 4 to 7, **characterized in that** the framework (19) comprises, on the side, rails (44) for carrying and guiding the carriages (41) on which the pushers (40) are mounted, which carriages (41) are firmly attached to a single movement mechanism of the type with continuous belts (46) and they comprise jack-type means (43) for vertically manoeuvring said pushers (40).

9. Grouping station according to any one of claims 3 to 8, **characterized in that** the guide structure (20) comprises a guide wall (6) matched to the type of products (2), which guide wall (6) is constituted by a beam (37) which extends for the whole length of said grouping station (3), which beam (37) comprises, on the side exposed to said products (2), a guide rail (38) fitted with a multitude of idler-rollers in order to facilitate the movement of said products (2) between said guide walls (6).

10. Grouping station according to claim 9, **characterized in that** the beam (37) of the guide structure (20) includes a sort of cover (39) which runs above the upper rim of the rails (38) with idler-rollers, which cover (39) prevents any risk of the envelope of the products (2) becoming caught on said rails (38), and in particular, when packs are involved, the wrapping in the form of plastic film.

## Patentansprüche

1. Verfahren zum Gruppieren von Produkten in Postenform und zum Transportieren des Postens zu einer Entnahmestation, wobei das Verfahren darin besteht: - die Produkte direkt auf dem Boden der Gruppier- und Transportstation (3) in Gänge (5) einzubringen, um den Posten zu bilden, - die Führungsstrukturen (20), die die Gänge (5) bilden, senkrecht einzuziehen, sobald den Posten gebildet ist - den Posten über Verschiebemittel in Form von Schiebern (40), die unter den Führungsstrukturen verlaufen, zu der Entnahmestation (11) zu transportieren, - diese Führungsstrukturen (20) erneut in einer aktiven Stellung anzuordnen, und - die Schieber (40) anzuheben, um sie in die Ausgangsstellung zurückzubringen, indem sie über die Führungsstrukturen (20) hinweg gleiten, und zwar in einer Art von Drehbewegung um die Letzteren herum.

2. Station zum Gruppieren und Transportieren von Produkten (2), zum Beispiel in einer Palettiervorrichtung, zur Ausführung des Verfahrens nach Anspruch 1, wobei die Station (3) zwischen der Auswahlstation der Zufuhrstrecke (1) und dem Tisch (12) der Entnahme- oder Palettierstation (11) angeordnet ist, **dadurch gekennzeichnet, dass** die Station aufweist: - einen Boden, bestehend aus einer Fördereinrichtung (4) mit Motor, um die Produkte (2) vom Eingang zu dem Anschlagsystem (7), das sich an seinem Auslass befindet, zu befördern, - Strukturen (20), um die Produkte (2) auf der Fördereinrichtung (4) zu führen und um sie in mehreren parallelen Reihen zueinander anzuordnen, - Mittel (10), um den auf diese Weise gebildeten Posten zu verschieben und ihn auf dem Tisch (12) aufzubringen, - Mittel, um die Führungsstrukturen (20) einzuziehen, indem sie oberhalb der Höhe der Mittel (10) zum Verschieben der Produkte (2) angeordnet werden, Mittel, um die Rückführung der Verschiebemittel (10) an ihren Ausgangspunkt zu ermöglichen, indem sie oberhalb der Produkte (2), die von der Fördereinrichtung (4) zugeführt werden, und oberhalb der Führungsstrukturen (20), hinweg gleiten, um bei den Verschiebemitteln (10) eine umhüllende Bewegung um Führungswände (6) der Führungsstrukturen (20) herum auszulösen.

3. Gruppierstation nach Anspruch 2, **dadurch gekennzeichnet, dass** sie aufweist: - Führungsstrukturen (20) in umgekehrter T-Form, deren horizontaler Abschnitt die Führungswand (6) bildet und - Mittel (10) zum Verschieben des Produktpostens (2) in Form von Schiebern (40), wobei die Schieber (40) einerseits durch seitliche Arme (42) getragen werden, die in einem Abstand zueinander angeordnet sind, der größer ist als die Länge der Führungswand (6), und die andererseits in einem ausreichenden Abstand zueinander angeordnet sind, um auf beiden Seiten des vertikalen Abschnitts des T zu verlaufen, wobei die Abstände es diesen Schiebern (40) ermöglichen, sich um die Abschnitte des T herum zu drehen.

4. Gruppierstation nach Anspruch 3, **dadurch gekennzeichnet, dass** sie einen Unterbau (19) aufweist, dessen parallelepipedförmige Konstruktion in ihrem oberen Mittelteil ein Gestell (21) umfasst, um die Führungsstrukturen (20) zu stützen, wobei sich das Gestell (21) in Form eines horizontalen Trägers darstellt, der so angeordnet ist, dass er die Strukturen und insbesondere den vertikalen Abschnitt des T trägt.

5. Gruppierstation nach Anspruch 4, **dadurch gekennzeichnet, dass** der vertikale Abschnitt des T jeder Führungsstruktur (20) teleskopartig ist, wobei der Abschnitt einen Schaft (30) umfasst, der sich vom dem Trägergestell (21) nach unten hin erstreckt, und eine U-förmige Platine (31) mit Schienen (34) und einem zylinderartigen Bedienelement (35) zwischen beiden.

6. Gruppierstation nach einem der Ansprüche 4 oder 5, **dadurch gekennzeichnet, dass** sie ein Gestell (21) aufweist, das geeignete Mittel umfasst, um eine Einstellung der Führungsstrukturen (20) zueinander und insbesondere eine Einstellung ihres Abstandes in Abhängigkeit von der Art der Produkte (2) zu ermöglichen.

7. Gruppierstation nach einem der Ansprüche 4 bis 6, **dadurch gekennzeichnet, dass** die Mittel zur Einstellung des Abstandes der Führungsstrukturen (20) aus einem Schraube-Mutter-System (24) bestehen, dessen Schraubteil auf einer Welle (25) angeordnet ist, die sich in das Trägergestell (21) und in den oberen Teil jedes Schafts (30) erstreckt, wobei die Schäfte (30) in Dreiergruppen angeordnet sind: - ein mittlerer Schaft (22), der als Referenzschaft für das Schraube-Mutter-System (24) dient und der in Bezug auf das Gestell (21) feststehend ist, sowie - zwei seitliche Schäfte (23), die zu beiden Seiten dieses feststehenden Schafts (22) angeordnet sind, wobei die seitlichen Schäfte (23) jeweils eine Mutter (28) aufweisen, die mit der Schraube zusammenwirkt, deren Steigungen umgekehrt sind, um gleichzeitig die seitlichen Schäfte (23) zu beiden Seiten des mittleren Schafts (22) auf Abstand zu halten, um den Abstand der Führungsstrukturen (20) an die Abmessungen der Produkte (2) anzupassen.

8. Gruppierstation nach einem der Ansprüche 4 bis 7, **dadurch gekennzeichnet, dass** der Unterbau (19) seitlich Schienen (44) aufweist, um die Schlitten (41), auf denen die Schieber (40) angebracht sind, zu tragen und zu führen, wobei die Schlitten (41) mit ein und demselben mit Laufriemen versehenen Verschiebemechanismus (46) formschlüssig verbunden sind und sie zylinderartige Mittel (43) aufweisen, um die Schieber (40) vertikal zu bedienen.

9. Gruppierstation nach einem der Ansprüche 3 bis 8, **dadurch gekennzeichnet, dass** die Führungsstruktur (20) eine Führungswand (6) umfasst, die an die Art der Produkte (2) angepasst ist, wobei die Führungswand (6) aus einem Träger (37) besteht, der sich über die gesamte Länge der Gruppierstation (3) erstreckt, wobei der Träger (37) auf der den Produkten (2) zugewandten Seite eine Führungsschiene (38) aufweist, die mit einer Vielzahl von Rollen ausgestattet ist, um die Bewegung der Produkte (2) zwischen den Führungswänden (6) zu erleichtern.

10. Gruppierstation nach Anspruch 9, **dadurch gekennzeichnet, dass** der Träger (37) der Führungsstruktur (20) eine Art Kappe (39) aufweist, die sich über dem oberen Rand der Laufschienen (38) erstreckt, wobei die Kappe (39) jegliche Gefahr eines Hängenbleibens der Umhüllung der Produkte (2) auf der Höhe der Schienen (38) und insbesondere, wenn es sich um Packs handelt, der Umhüllung in Form einer Kunststofffolie vermeidet.
